# EUROPÄISCHE PATENTSCHRIFT

(11) **EP 0 823 267 B1**
(45) Veröffentlichungstag und Bekanntmachung des Hinweises auf die Patenterteilung: **04.10.2001**
(21) Anmeldenummer: 97113217.0
(22) Anmeldetag: 31.07.1997
(51) Int. Cl.: A63C 17/26, A63B 71/06, G08C 17/00, G01C 22/02

(54) **Sportgerät mit Datenanzeige für den Benutzer**
Sport device with data display for the user
Appareil de sport avec affichage des données pour un utilisateur

(30) Priorität: 05.08.1996 CH 192496
(43) Veröffentlichungstag der Anmeldung: 11.02.1998
(73) Patentinhaber: Lumpert, Jürg B., 8038 Zürich (CH)
(72) Erfinder: Lumpert, Jürg B., 8038 Zürich (CH)
(74) Vertreter: Müller, Hans-Jürgen, Dipl.-Ing.

(56) Entgegenhaltungen:
- EP-A- 0 402 620
- WO-A-93/04745
- DE-A- 4 403 491
- DE-C- 2 458 894

## Beschreibung

Die Erfindung bezieht sich auf ein Sportgerät gemäß dem Oberbegriff des Anspruchs 1.

Sportgeräte dienen ihren Benutzern einerseits der Freizeitbeschäftigung, andererseits aber auch dem Bewegungs-, Ausdauer- und Krafttraining. Zur Kontrolle der Aktivität des Benutzers sind dabei oftmals Datenanzeigen vorhanden, die dem Benutzer Auskunft über die Aktivität des Benutzers geben. Ein Beispiel für solche Datenanzeigen sind beispielsweise Tachometer mit Kilometerzählern an Fahrrädern, die dem Benutzer des Fahrrads die zurückgelegte Wegstrecke und die momentane Geschwindigkeit anzeigen. Auch an Sportgeräten anderer Art sind solche Anzeigegeräte üblich. Dabei sind auch Lösungen bekannt, bei denen Körperfunktionen wie etwa Pulsschlag angezeigt werden.

In der nahen Vergangenheit haben sogenannte Inline Skates als Sportgerät und für den Freizeitgebrauch große Verbreitung gefunden. Auch sie können insbesondere für Bewegungs- und Ausdauertraining verwendet werden. Auch bei Inline Skates sind Zusatzausrüstungen bekanntgeworden. So ist beispielsweise in der US-PS 5,484,164 eine optische Warneinrichtung beschrieben, mit der die Benutzer solcher Inline Skates auf sich aufmerksam machen können.

Aus EP-A-0 402 620 ist eine Vorrichtung bekannt, mit der bei einem Fahrrad Daten von einem am Rad montierten Umdrehungsmesser drahtlos zu einem Empfänger mit einer Anzeigevorrichtung übertragen werden. Der Sender wird von einer Batterie mit Strom versorgt.

Aus WO-A-93/04745 ist ein Generator bekannt, der innerhalb eines Rades eines Sportgeräts wie Inline Skates angeordnet ist und aus der Bewegungsenergie elektrischen Strom erzeugen kann.

Der Erfindung liegt die Aufgabe zugrunde, solche der Fortbewegung dienenden Sportgeräte mit Rädern, Rollen und dergleichen mit einer Vorrichtung zur Datenanzeige auszustatten.

Die genannte Aufgabe wird erfindungsgemäß durch die Merkmale des Anspruchs 1 gelöst. Vorteilhafte Weiterbildungen ergeben sich aus den abhängigen Ansprüchen.

Nachfolgend wird ein Ausführungsbeispiel der Erfindung anhand der Zeichnung näher erläutert. Die erfindungsgemäßen Sportgeräte sind mit einer Vorrichtung ausgestattet, die die Fortbewegung charakterisierende Kennzahlen ermittelt und zur Anzeige bringt.

Das erfindungsgemäße Sportgerät besitzt einen in einem Rad integrierten Spannungsgenerator, der aus der Bewegungsenergie beim bestimmungsgemäßen Gebrauch des Sportgeräts elektrische Spannung zu erzeugen in der Lage ist, außerdem einen ebenfalls im Rad integrierten Sensor zur Erfassung von Wegimpulsen und daneben einen gleichfalls im Rad angeordneten Sender, der die erfaßten Wegimpulse drahtlos zu einer mit einem Empfänger ausgestatteten Auswerte- und Anzeigevorrichtung überträgt. Das nachfolgend beschriebene Ausführungsbeispiel zeigt die Erfindung am Beispiel eines Inline Skates, jedoch ist die Erfindung nicht auf diesen Typ von Sportgeräten beschränkt.

Es zeigen:
- Fig. 1: ein Schema mit einem Rad eines Inline Skates,
- Fig. 2: den Aufbau eines Rades,
- Fig. 3: ein Schema eines Spannungsgenerators,
- Fig. 4: eine Schaltung mit dem Spannungsgenerator, einem Sensor zur Ertassung von Wegimpulsen und einem Sender,
- Fig. 5: ein Detail eines Empfängers mit einer Auswertevorrichtung,
- Fig. 6: eine Raumform eines Empfängers mit einer Auswerte- und Anzeigevorrichtung und
- Fig. 7 bis 9: Einzelheiten eines Spannungsgenerators.

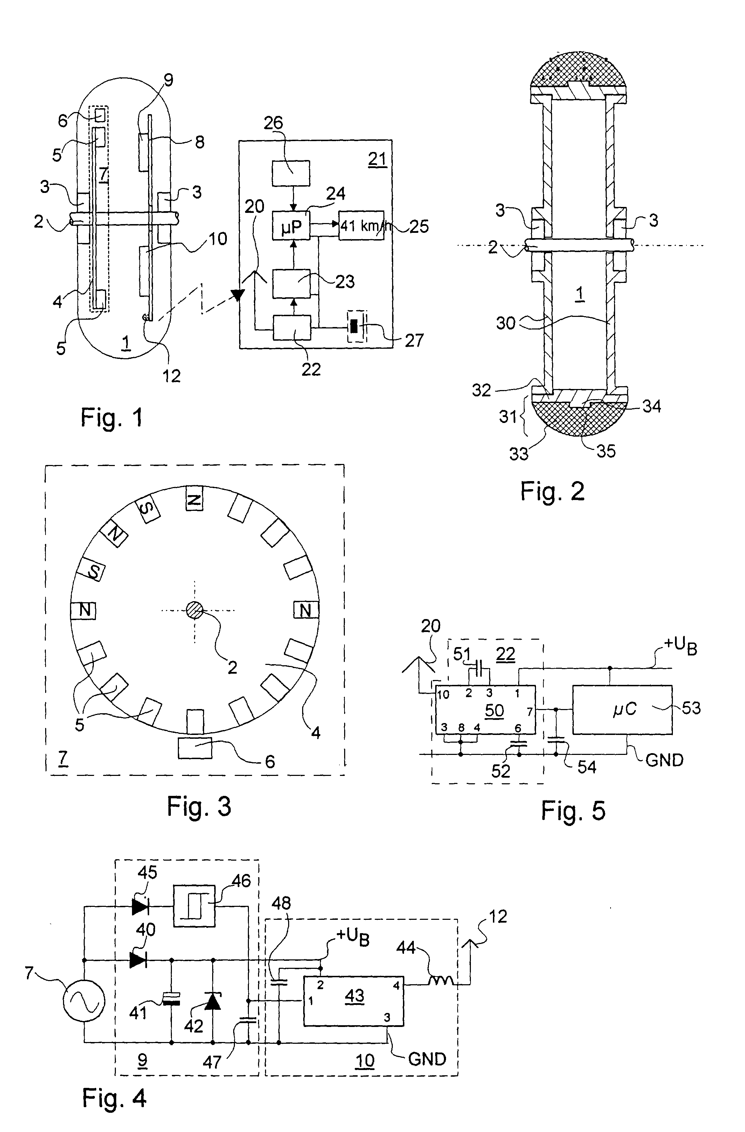

In der Fig. 1 bedeutet 1 ein Rad eines Inline Skates, das um eine Achse 2 drehbar ist, die in einem nicht dargestellten Laufwerk eines Inline Skates befestigt ist. Die leichtgängige Drehbarkeit des Rades 1 wird erreicht durch je ein beidseits angeordnetes Kugellager 3, das einerseits mit seinem Innenring auf der Achse 2 und andererseits mit seinem Außenring mit dem Rad 1 verbunden ist. Mit der Achse 2 fest verbunden ist ein Stator 4, an dem Magnete 5 befestigt sind. Der Stator 4 hat vorteilhaft eine kreisrunde Gestalt und die Magneten 5 sind entlang seines Außendurchrnessers angeordnet. Im Rad 1 fest angeordnet ist eine Spule 6, so daß sich die Spule 6 bei Drehung des Rades 1 um die Achse 2 auf einer Kreisbahn um den Stator 4 mit den Magneten 5 bewegt. Diese Spule 6 bildet somit zusammen mit den auf dem Stator 4 angeordneten Magneten 5 einen Spannungsgenerator 7, dessen Bestandteile in der Figur mit gestrichelter Linie zusammengefaßt sind.

Ebenfalls mit dem Rad 1 fest verbunden und sich mit ihm drehend ist im Rad 1 eine Trägerplatte 8 angeordnet, auf der eine Steuerschaltung 9 und ein Sender 10 befestigt sind. Die Steuerschaltung 9 ist - in der Zeichnung der Übersichtlichkeit wegen nicht dargestellt - mit der Spule 6 verbunden. Eine der Aufgaben der Steuerschaltung 9 ist die Aufbereitung der in der Spule 6 erzeugten elektrischen Energie für den Betrieb des Senders 10. Daneben dient die Steuerschaltung 9 der Generierung von Wegimpulsen. Der Sender 10 ist mit einer Antenne 12 verbunden.

Der Sender 10 sendet über die Antenne 12 ein mit Wegimpulsen moduliertes Signal. Dieses Signal kann von einer Antenne 20 einer Auswerte- und Anzeigevorrichtung 21 empfangen werden. Die Antenne 20 ist mit einem Empfänger 22 verbunden, so daß das empfangene Signal vom Empfänger 22 detektiert werden kann. Der Empfänger 22 demoduliert das empfangene Signal, gewinnt also das Wegimpuls-Signal zurück und stellt dieses an einem Ausgang bereit. Dieser Ausgang des Empfängers 22 ist mit einem Eingang eines Signalkonverters 23 verbunden. In diesem Signalkonverter 23 wird das Wegimpuls-Signal in eine für einen Mikroprozessor 24 geeignete Form gebracht und in dieser Form über eine entsprechende Verbindung an den Mikroprozessor 24 weitergeleitet. Der Mikroprozessor 24 verarbeitet die eingehenden Wegimpuls-Signale, berechnet aus der zeitlichen Folge der einzelnen Wegimpulse die den Benutzer interessierenden Daten und steuert eine Anzeige 25 so, daß die Daten darauf dargestellt werden. Vorteilhaft ist auch eine Bedieneinrichtung 26 vorhanden, mit deren Hilfe der Mikroprozessor 24 in der Weise beeinflußbar ist, daß er jeweils bestimmte vom Benutzer gewünschte Informationen zur Anzeige bringt. Die Auswerte- und Anzeigevorrichtung 21, der Empfänger 22, der Signalkonverter 23, der Mikroprozessor 24, die Anzeige 25 und die Bedieneinrichtung 26 werden durch eine Batterie 27 mit Spannung versorgt.

Die vorstehend beschriebene Einrichtung funktioniert wie folgt. Wenn das Inline Skate auf einem Untergrund bewegt wird, wird durch das Drehen des Rades 1 um die Achse 2 in der Spule 6 eine Spannung erzeugt, mit der der Sender 10 betrieben wird. Die vom Spannungsgenerator 7 erzeugte Spannung ist eine Wechselspannung, deren Frequenz unmittelbar mit der Bewegung des Inline Skate zusammenhängt. Erfindungsgemäß wird die vom Spannungsgenerator 7 erzeugte elektrische Energie mit Hilfe der Steuerschaltung 9 in eine Gleichspannung zum Betrieb des Senders 10 umgeformt. Ein ebenfalls im Rad 1 angeordneter Generator für die Erzeugung von Wegimpulsen kann an sich beliebiger Bauart sein. Besonders vorteilhaft ist es, die vom Spannungsgenerator 7 erzeugte Wechselspannung auch zur Generierung der Wegimpulse zu benutzen. Da die Frequenz der Wechselspannung einen Zusammenhang mit der Rollgeschwindigkeit des Rades 1 hat, sind also Weginformationen in der Wechselspannung enthalten: Die Frequenz der Wechselspannung korreliert eindeutig mit der Geschwindigkeit und die Zahl der Wellenzüge der Wechselspannung korreliert eindeutig mit dem zurückgelegten Weg. Deshalb ist es vorteilhaft, wenn von der Steuerschaltung 9 aus dem Spannungssignal des Spannungsgenerators 7 zugleich die Wegimpulse gewonnen. Die Wegimpulse werden dem Signal des Senders 10 aufmoduliert.

Für solche Zwecke sind in verschiedenen Ländern bestimmte Frequenzen vorgesehen, in Europa beispielsweise die Frequenz von 433,9 MHz. In anderen Ländern und Zonen sind andere Frequenzen innerhalb des Bereichs 200 bis 960 MHz üblich, in den USA beispielsweise die Frequenzen 303,8 MHz, 315 MHz, 345 MHz, 390 MHz, 418 MHz und das Band von 902 bis 928 MHz, sowie auch Frequenzen im Langwellen-Bereich. Auswerte- und Anzeigevorrichtung 21 mit dem Empfänger.22, Sender 10 und die Antennen 12 und 24 sind jeweils für die betreffende Frequenz ausgelegt. Das von der Antenne 12 im Rad 1 abgestrahlte Signal, in der Fig. 1 durch einen gestrichelt gezeichneten Blitzpfeil dargestellt, wird von der Antenne 20 in der Auswerte- und Anzeigevorrichtung 21 aufgenommen.

Wie zuvor schon beschrieben, werden in der Auswerte- und Anzeigevorrichtung 21 die Wegimpulse zurückgewonnen und dem Mikroprozessor 24 zugeleitet. Dieser verarbeitet die eingehenden Wegimpulse. Jeder Wegimpuls entspricht einer bestimmten Distanz, die mit dem Durchmesser bzw. dem Umfang des Rades 1 korreliert. Beträgt beispielsweise der Durchmesser des Rades 1 72 mm, so hat der Umfang des Rades 1 einen Wert von 226,2 mm. Gibt die Steuerschaltung 9 pro Umdrehung des Rades 1 einen Wegimpuls ab, so hat jeder Wegimpuls eine Wertigkeit von 226,2 mm. Durch Zählung der Zahl der Wegimpulse kann also die zurückgelegte Strecke berechnet werden. Bei einer später beschriebenen Ausführungsform des Spannungsgenerators 7 mit 16 Magneten liefert dieser eine Wechselspannung, deren Frequenz der achtfachen Umdrehungszahl entspricht. Entsprechend werden pro Umdrehung des Rades 1 8 Wegimpulse generiert, so daß jeder einzelne Wegimpuls eine Wertigkeit von 28,3 mm aufweist. Aus der Zahl der Wegimpulse pro Zeiteinheit bzw. aus dem zeitlichen Abstand zweier Wegimpulse kann der Mikroprozessor 24 die Geschwindigkeit berechnen.

Um die Auswerte- und Anzeigevorrichtung 21 universell einsetzbar zu machen, ist es vorteilhaft, wenn in einen dem Mikroprozessor 24 zugeordneten Datenspeicher mittels der Bedieneinrichtung 26 der Durchmesser des Rades 1 eingebbar ist. Damit kann die Auswerte- und Anzeigevorrichtung 21 an verschiedene mögliche Durchmesser angepaßt werden, die beispielsweise im Bereich von 72 bis 82 mm liegen können. Bei anderen Sportgeräten als Inline Skates ergeben sich entsprechend andere Dimensionsbereiche. Es ist zudem möglich, den im Laufe der Zeit beim Gebrauch eintretenden Verschleiß am Rad 1 zu berücksichtigen. Der Benutzer kann von Zeit zu Zeit den Durchmesser des Rades 1 nachmessen und - sollte er vom gespeicherten bisherigen Wert abweichen - mit Hilfe der Bedieneinrichtung 26 neu eingeben oder ändern.

Bei Inline Skates besteht nur in Ausnahmefällen, nämlich bei Fahrt im Gefälle, dauernder Bodenkontakt. Ansonsten führt der Benutzer meist Wechselschritte aus. Das führt dazu, daß das die erfindungsgemäßen Merkmale aufweisende Rad 1 nicht immer Bodenkontakt hat. Wenn kein Bodenkontakt besteht, so wird das Rad 1 nach kurzer Zeit zum Stillstand kommen, weil der Spannungsgenerator 7 eine nicht unbedeutende Bremsfunktion ausübt. Bei sich frei drehendem Rad 1 ist diese Bremsfunktion beachtlich, während sie angesichts der großen Masse durch das Körpergewicht des Benutzers beim Aufsetzen auf der Fahrbahn keine Rolle spielt und gegenüber der Bremswirkung durch den Luftwiderstand keine Rolle spielt. Auf die sich aus dem nicht dauernden Bodenkontakt ergebenden Probleme bei der Berechnung von Weg und Geschwindigkeit wird später noch eingegangen. Um eine möglichst genaue Weg- und Geschwindigkeitserfassung zu ermöglichen, kann es vorteilhaft sein, das erfindungsgemäße Rad 1 in das Laufwerk jenes Geräts einzubauen, das der Benutzer an jenes Bein plaziert, das er gewöhnlich als Standbein benutzt, weil er erfahrungsgemäß mit diesem Bein während der überwiegenden Zeit Bodenkontakt hat.

Durch die Anordnung des Spannungsgenerators 7, der Steuerschaltung 9, des Senders 10 und der damit im Zusammenhang stehenden weiteren Bauteile besteht innerhalb des Rades 1 ein erheblicher Platzbedarf. Deshalb ist es zur Verwirklichung der Erfindung erforderlich, diesen Platzbedarf durch eine besondere Gestaltung des Rades 1 zu befriedigen.

In der Fig. 2 ist der Aufbau eines Rades aus mechanischen Einzelteilen gezeigt, durch den dieser Platzbedarf gedeckt werden kann. Das Rad 1 besteht aus zwei Radscheiben 30 und einem diese umgebenden und verbindenden Radreifen 31, der seinerseits aus einem Träger 32 und einem Laufkörper 33 zusammengesetzt ist. Dabei weist der Träger 32 Formstücke 34 auf, in die Vertiefungen 35 des Laufkörpers eingreifen. Die Formstücke 34 und die Vertiefungen 35 sind räumlich so gestaltet, daß sie das Verrutschen des Laufkörpers 33 auf dem Träger 32 verhindern, und zwar sowohl in Umfangsrichtung als auch in seitlicher Richtung. Die Formstücke 34 sind um Träger 32 unmittelbar angeformt. So kann der Träger 32 beispielsweise ein entsprechend gestaltetes Guß-, Preß-, Spritz- oder Druckgußteil sein. Die Vertiefungen des Laufkörpers 33 ergeben sich zwangsweise, wenn die Herstellung des Radreifens 31 auf eine solche Weise erfolgt, daß der Träger 32 in einem entsprechenden Werkzeug umspritzt wird. Dabei wird eine innige Verbindung zwischen Träger 32 und Laufkörper 33 erreicht.

In einer passenden zentrischen Vertiefung jeder Radscheibe 30 ist ein schon im Zusammenhang mit der Fig. 1 erwähntes Kugellager 3 eingepaßt. Der innere Ring des Kugellagers 3 ist mit der Achse 2 verbunden. Die Radscheiben 30 sind mit dem Radreifen 31 fest verbunden, wobei in Analogie zur vorgenannten Gestaltung des Radreifens 31 die ineinandergreifenden Flächen von Radscheiben 30 und Radreifen 31 so gestaltet sind, daß sowohl das Verrutschen des Radreifens 31 in Umfangsrichtung als auch das Verdrehen der beiden Radscheiben 30 gegeneinander unmöglich ist. Das kann beispielsweise durch entsprechende Nuten, Kerben und dergleichen geschehen.

In der Fig. 3 ist der Spannungsgenerator 7 schematisch dargestellt. Er besteht aus der Spule 6 und einer Anzahl von Magneten 5. Die Magneten 5 sind entlang der Umfangslinie des Stators 4 angeordnet. Der Stator 4 ist mit der Achse 2 starr verbunden. Da die Achse 2 im nicht dargestellten Laufwerk starr befestigt ist, steht also auch der Stator 4 starr im Laufwerk, dreht sich also bei sich drehendem Rad 1 nicht mit. Hingegen ist die Spule 6 mit dem sich drehenden Rad 1 verbunden. Die Spule 6 ist der Umfangslinie des Stators 4 unmittelbar benachbart. Die Zahl der Magnete 5, die sich über den Umfang des Stators 4 gleichmäßig verteilt, ist geradzahlig und jeweils benachbarte Magnete 5 sind entgegengesetzt magnetisiert. Bei sich drehendem Rad 1 wird somit in der Spule 6 eine elektrische Spannung induziert.

Die Spule 6 ist unmittelbar außerhalb der Umfangslinie des Stators 4 angeordnet. Der verbleibende Luftspalt soll möglichst klein sein. Um eine möglichst große Menge elektrischer Energie gewinnen zu können, kann es vorteilhaft sein, mehrere Spulen 6 vorzusehen. So kann die Zahl der Spulen 6 halb so groß sein wie die Zahl der Magnete 5. In einem solchen Fall sind die Spulen 6 wie die Magnete 5 gleichmäßig über den Umfang verteilt, so daß der Abstand von Spule 6 zu Spule 6 im Bogenmaß doppelt so groß ist wie der Abstand von Magnet 5 zu Magnet 5 im Bogenmaß. Im vorgenannten Fall werden die einzelnen Spulen vorteilhaft allesamt parallel geschaltet. Diese Lösung hat den Vorteil, daß die Ausbeute an elektrischer Energie größer ist als beim Vorhanden sein nur einer Spule 6.

Die Zahl der Spulen 6 kann aber auch gleich groß sein wie die Zahl der Magnete 5. Die Abstände im Bogenmaß sind dann allesamt gleich. In einem solchen Fall ist es vorteilhaft, jeweils Zweiergruppen von benachbarten Spulen 6 zu bilden und die beiden Spulen 6 antiparallel oder mit unterschiedlichem Wickelsinn in Reihe zu schalten Alle diese Zweiergruppen sind dann parallel geschaltet.

Die Zahl der Magnete 5 beträgt beispielsweise 16. Bei 8 der Magnete 5 liegt somit der magnetische Nordpol N auf der Vorderseite des Stators 4 und der magnetische Südpol S auf der Rückseite. Vorder- und Rückseite beziehen sich dabei auf die Ansicht gemäß Fig. 3. Bei den übrigen 8 Magneten 5 ist es umgekehrt. Im Rahmen der Erfindung sind andere Magnetisierungsrichtungen und Spulenanordnungen möglich.

In der Fig. 4 ist eine Schaltung mit dem Spannungsgenerator 7, der Steuerschaltung 9 und dem Sender 10 dargestellt. An einen ersten Anschlußpunkt des Spannungsgenerators 7 ist eine Diode 40 angeschlossen, wobei dem Spannungsgenerator 7 die Anode der Diode 40 zugewandt ist. Am Kathodenanschluß der Diode 40, die den positiven Betriebsspannungsanschluß +U_{B} bildet, sind angeschlossen ein Ladekondensator 41, eine Zenerdiode 42 und ein integrierter Baustein 43. Der zweite Anschluß des Ladekondensators 41 und der Zenerdiode 42 sind mit einem zweiten Anschlußpunkt des Spannungsgenerators 7 verbunden. Dieser zweite Anschlußpunkt bildet die Bezugsmasse GND, an die auch der integrierte Baustein 43 angeschlossen ist. Der integrierte Baustein 43 ist beispielsweise ein in Hybridtechnik realisierter UHF-Sender des Typs HX 1000 der Firma RF Monolithics Inc., Dallas, Texas, USA. Die Anschlußbezeichnungen "1" bis "4" beziehen sich auf dieses Bauelement, jedoch sind beliebige andere UHF-Empfänger bzw. Empfänger für Langwellen einsetzbar. Je nach Angaben des jeweiligen Herstellers wäre dann der Schaltungsaufbau entsprechend zu variieren.

Die Antenne 12 ist über ein Anpaßglied 44, beispielsweise einen induktiven oder einen ohmschen Widerstand, an einen Eingang "4" des integrierten Bausteins 43 angeschlossen. An die Bezugsmasse GND ist der integrierte Baustein 43 mit seinem Anschluß "3" angeschlossen. Am positiven Betriebsspannungsanschluß +U_{B} liegt der integrierte Baustein 43 mit seinem Anschluß "2".

An den Anodenanschluß der Diode 40, identisch mit dem einen Anschluß des Spannungsgenerators 7, ist eine weitere Diode 45 mit ihrer Anode angeschlossen. Deren Kathode ist verbunden mit einem Eingang eines Schmitt-Triggers 46, dessen Ausgang mit dem Anschluß "1" des integrierten Bausteins 43 verbunden ist. Die Diode 45 und der Schmitt-Trigger 46 bilden jenen Teil der Steuerschaltung 9, der in der schon als besonders vorteilhaft geschilderten Weise unmittelbar aus der Wechselspannung die Wegimpulse generiert. Zwischen dieser Verbindung und der Bezugsmasse GND kann noch ein weiterer Kondensator 47 angeschlossen sein, der allfällige Störsignale dämpfen kann. Ebenso kann zwischen dem Anschluß "2" des integrierten Bausteins 43 und der Bezugsmasse GND noch ein weiterer Kondensator 48 angeschlossen sei, der dazu dient, das Rauschen der Speisespannung +U_{B}, d.h. ein Rippel der Speisespannung +U_{B}, zu begrenzen bzw. weitestgehend zu verhindern.

Die Dioden 40 und 45, der Kondensator 41, die Zenerdiode 42 und der Schmitt-Trigger 46 bilden zusammen die Steuerschaltung 9.

Die Funktion der zuvor beschriebenen Schaltung ist die folgende: Die vom Spannungsgenerator 7 erzeugte Wechselspannung wird mittels der Diode 40 im Einweg gleichgerichtet und die Spannung auf dem Ladekondensator 41 gespeichert. Die Zenerdiode 42 begrenzt die Spannung auf einen Wert von beispielsweise 3,6 Volt. Ein nicht eingezeichneter Begrenzungswiderstand für den Ladestrom des Kondensators ist dann gar nicht erforderlich, wenn der Innenwiderstand des Spannungsgenerators 7, bestimmt durch die Impedanz der nicht dargestellten Spule 6, genügend groß ist. Das ist lediglich eine Bemessungsfrage. Die vom Spannungsgenerator 7 erzeugte Wechselspannung wird außerdem über die Diode 45, die eine Kleinsignaldiode ist, dem Eingang des Schmitt-Triggers 46 zugeführt. Der Schmitt-Trigger 46 formt aus der sinusförmigen Wechselspannung eine Folge von Rechteckimpulsen, wobei die Frequenz dieser Rechteck-Impulsfolge identisch ist mit der Frequenz der Wechselspannung. Die Rechteck-Impulsfolge gelangt auf den Anschluß "1" des integrierten Bausteins 43. Somit wird der Sender mit der genannten Rechteck-Impulsfolge moduliert.

Die Bemessung der Antenne 12 richtet sich nach den Angaben des Herstellers des integrierten Bausteins 43. Als geeignet hat sich beispielsweise eine Kurzdraht-Antenne von 60 mm Länge erwiesen. Eine solche Antenne 12 ist im Rad 1 problemlos unterzubringen.

Der in Fig. 1 erwähnte Sender 10 ist also gemäß dem Ausführungsbeispiel nach Fig. 4 verwirklicht durch den integrierten Baustein 43 zusammen mit dem Anpaßglied 44. Diese funktionale Ausgestaltung des Senders 10 ist in der Fig. 4 durch eine gestrichelte Linie zusammengefaßt.

Zur Funktion ist noch festzuhalten, daß der Sender 10 immer dann in Betrieb ist, wenn die vom Spannungsgenerator 7 erzeugte Spannung einen bestimmten Grenzwert überschreitet. Die Schaltung ist so ausgelegt, daß dies bei einer bestimmten Mindestdrehgeschwindigkeit des Rades 1 im Inline Skate der Fall ist, also bei einer bestimmten Rollgeschwindigkeit der Inline Skates auf der Fahrbahn. Ist die Geschwindigkeit kleiner als dieser Grenzwert, dann ist der Sender 10 nicht in Betrieb. Zweckmäßigerweise wird dies in der Anzeige 25 signalisiert, indem ein besonderes Symbol "Pause" angezeigt wird, wenn der Empfänger 22 der Auswerte- und Anzeigevorrichtung 21 (Fig. 1) kein Signal empfängt.

Fig. 5 zeigt ein Detail eines Empfängers mit einer Auswertevorrichtung, die Teil der Auswerte- und Anzeigevorrichtung 21 (Fig. 1) ist. Die Antenne 20 ist direkt oder über ein Anpaßglied, beispielsweise einen induktiven oder ohmschen Widerstand, mit einem integrierten Baustein 50 verbunden. Dieser integrierte Baustein 50 ist beispielsweise ein in Hybridtechnik realisierter UHF-Empfänger des Typs RX 1000 der Firma RF Monolithics Inc., Dallas, Texas, USA. Die in der Fig. 5 angegebenen Anschlußbezeichnungen beziehen sich auf dieses Bauelement, jedoch sind beliebige andere UHF-Empfänger einsetzbar. Je nach Angaben des jeweiligen Herstellers wäre dann der Schaltungsaufbau entsprechend zu variieren.

Während die Antenne 20 an den Anschluß "10" des integrierten Bausteins 50 angeschlossen, liegt am Anschluß "1" der positive Betriebsspannungsanschluß +U_{B}, der gemäß Fig. 1 von einer Batterie 27 gespeist wird. Der integrierte Baustein 50 verfügt mit dem Anschluß "8" über einen Masseanschluß, der mit der Bezugsmasse GND verbunden ist, die ebenfalls mit der Batterie 27 (Fig. 1) in Verbindung steht. Gemäß den Empfehlungen des Herstellers sind die Anschlüsse "2" und "3" mit einem Kondensator 51 verbunden, während am Anschluß "6" ein weiterer Kondensator 52 angeschlossen ist, dessen zweiter Anschluß an der Bezugsmasse GND liegt. Diese Angaben beziehen sich auf den zuvor angegebenen Baustein und sind entsprechend zu variieren, wenn ein anderer Typ zum Einsatz kommen soll.

Der Anschluß "7" des integrierten Bausteins 50 ist mit einem Eingang eines Mikrocomputers 53 verbunden, der außerdem mit dem positiven Betriebsspannungsanschluß +U_{B} und mit der Bezugsmasse GND verbunden ist. An den Anschluß "7" des integrierten Bausteins bzw. den Eingang des Mikrocomputers 53 ist zudem ein weiterer Kondensator 54 angeschlossen, der der Störungsunterdrückung dient.

Der Mikrocomputer 53 ist beispielsweise ein kundenspezifischer Baustein, auch als ASIC bezeichnet, der einen Mikroprozessor, einen Datenspeicher und beispielsweise auch Elemente enthält, die funktionell dem Signalkonverter 23 (Fig. 1) entsprechen. Somit entspricht der integrierte Baustein 50 mit seinen Zusatzelementen wie Kondensatoren 51 und 52 dem Empfänger 22 der Fig. 1, während der Mikrocomputer 53 die Funktionalität des Mikroprozessors 24 und des Signalkonverters 23 (Fig. 1) umfaßt.

Die Funktion der in Fig. 5 dargestellten Schaltung ist wie folgt: Das von der Antenne 20 empfangene Signal, das vom Sender 10 (Fig. 1 und 4) stammt, wird vom Empfänger 22 demoduliert, d.h. daß die Folge von Wegimpulsen zurückgewonnen wird. Diese Wegimpulse werden vom Mikrocomputer 53 verarbeitet.

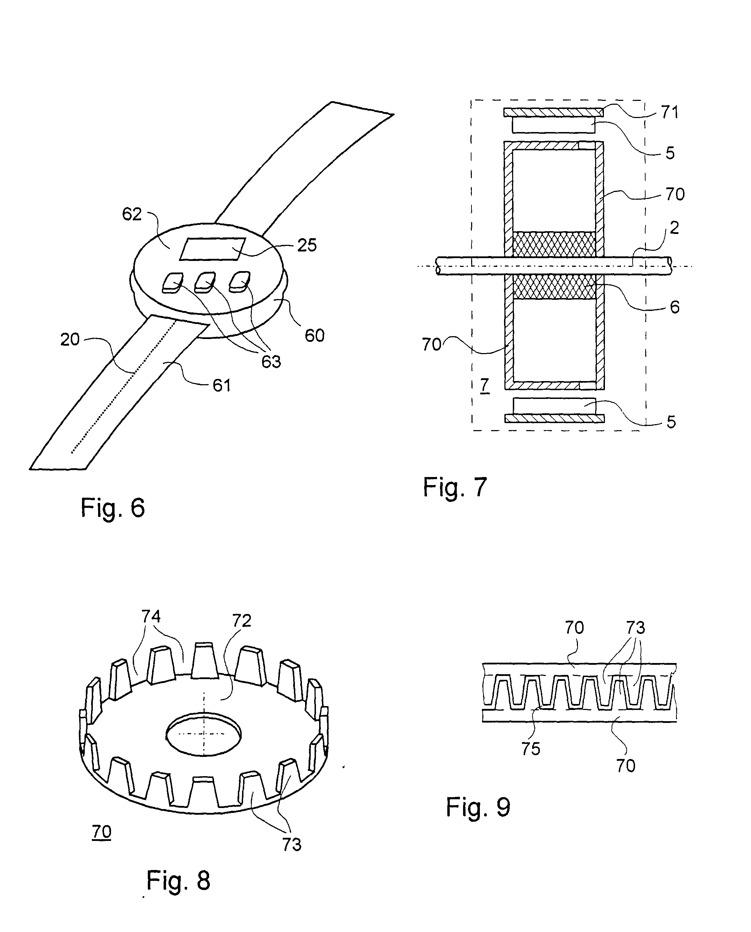

Fig. 6 zeigt eine Raumform eines Empfängers mit einer Auswerte- und Anzeigevorrichtung. In einem Gehäuse 60 sind alle Elemente der Auswerte- und Anzeigevorrichtung 21 (Fig. 1) untergebracht mit Ausnahme der Antenne 20. Letztere ist in ein Armband 61 integriert, mit dem sich das Gehäuse 60 am Arm eines Benutzers festmachen läßt. Dabei kann beispielsweise ein Klettverschluß Anwendung finden. Beispielsweise auf der Frontseite 62 des Gehäuses 60 sind Tasten 63 angeordnet, die die Bedieneinrichtung 26 (Fig. 1) bilden. Eine solche Raumform ist nicht zwingend, denn es bieten sich im Rahmen der Erfindung sehr viele alternative Gestaltungsmöglichkeiten. So ist es beispielsweise auch denkbar, alle Elemente der Auswerte- und Anzeigevorrichtung "1 (Fig. 1) in einer Sonnenbrille zu integrieren. Das Gestell der Sonnenbrille können beispielsweise die Antenne 20, den Empfänger 22, den Signalkonverter 23, den Mikroprozessor 24 und die Bedieneinrichtung 26 enthalten, während die Anzeige 26 etwa dadurch verwirklicht wird, daß sie in ein Brillenglas integriert wird, wobei mit Hilfe einer optischen Einrichtung wie etwa Fresnel-Linse die Anzeige trotz des geringen Abstandes zum Auge für den Benutzer bequem erkennbar wird.

Es wurde schon erwähnt, daß sich aus der Tatsache, daß das Rad 1 nicht immer Bodenkontakt hat, besondere Probleme bei der Ermittlung der Geschwindigkeit und des zurückgelegten Weges ergeben. Diesen Umständen kann durch besondere Maßnahmen Rechnung getragen werden, indem der Mikroprozessor 24 (Fig. 1) die eingehenden Wegimpuls-Informationen auf ganz spezielle Weise verarbeitet.

Eine dieser besonderen Maßnahmen ist eine Interpolation. Solange das Rad 1 Bodenkontakt hat, werden Wegimpulse erzeugt und verarbeitet. Wenn anschließend keine Wegimpulse am Mikroprozessor 24 eintreffen, so wird der vorherige Wert der Geschwindigkeit weiterhin anzeigt, sinnvollerweise ergänzt durch ein Symbol für "Meßpause". Damit funktioniert die Anzeige wie eine Art Schleppzeiger. Treffen nach einer Ruhezeit wieder Wegimpulse ein, so erfolgt eine Interpolation der Geschwindigkeit mit dem alten und dem neuen Wert. Gleichzeitig wird auf der Basis der interpolierten Geschwindigkeit und der Länge der Ruhezeit eine Zahl von Wegimpulsen ermittelt, die während der Ruhezeit aufgetreten wären, wenn das Rad 1 Bodenkontakt gehabt hätte. Diese Zahl der Wegimpulse wird bei der Summation zur Ermittlung des zurückgelegten Weges berücksichtigt. Wird eine lineare Interpolation angewendet, so spielt es keine Rolle, ob die ermittelte Geschwindigkeit nach einer Ruhezeit größer oder kleiner ist als die zuvor gemessene.

Wegen der mit der Erzeugung elektrischer Energie durch den Spannungsgenerator 7 verbundenen Bremswirkung kommt - wie zuvor schon erwähnt - das Rad 1 nach kurzer Zeit zum Stillstand, wenn kein Bodenkontakt besteht. Insbesondere dann, wenn durch eine auf niedrigen Stromverbrauch optimierte Auslegung der Steuerschaltung 9 und des Senders 10 auch der Spannungsgenerator 7 entsprechend ausgelegt wird, vermindert sich dessen Bremswirkung, was die Fehler bei der Ermittlung von Weg und Geschwindigkeit erhöht. Deshalb kann es vorteilhaft sein, den Bodenkontakt des Rades 1 durch besondere Maßnahmen zweifelsfrei zu detektieren. Dies kann beispielsweise dadurch geschehen, daß innerhalb des Rades 1 ein Drucksensor angeordnet wird. Ein solcher Drucksensor kann zum Beispiel ein Dehnungsmeßstreifen mit entsprechender Meßschaltung sein. Der bekannte Stand der Technik bietet hier allerlei Vorbilder.

Ist ein solcher Drucksensor vorhanden, so wird die Steuerschaltung 9 (Fig. 4) beispielsweise in der Art modifiziert, daß die von der Diode 45 in Verbindung mit dem Schmitt-Trigger 46 generierten Wegimpulse durch ein nachgeschaltetes Schaltglied dann nicht zum Anschluß "1" des integrierten Bausteins 43 gelangen, wenn der Drucksensor ein dem vom Boden abgehobenes Rad 1 signalisiert. Damit wird verhindert, daß während des Abhebens des Rades 1 vom Boden allenfalls noch generierte Wegimpulse gezählt werden.

Bei der Ermittlung der Geschwindigkeit sind prinzipiell zwei Verfahren möglich. Einerseits kann aus dem zeitlichen Abstand zweier Impulse direkt die Geschwindigkeit errechnet werden, andererseits kann die Zahl der Wegimpulse während einer vorgegebenen Zeitspanne ermittelt und daraus die Geschwindigkeit berechnet werden. Beide Verfahren sind weitestgehend gleichwertig. Es ist andererseits auch möglich, durch einen ersten Wegimpuls einen internen Zähler im Programm des Mikroprozessors 24 zu starten und durch einen nächsten Wegimpuls wieder zu stoppen und aus dem Zählerstand die Geschwindigkeit zu errechnen. Ein solches Verfahren bietet sich beispielsweise für kleine Geschwindigkeiten an. Entsprechend kann das im Mikroprozessor 24 ablaufende Programm auch so gestaltet sein, daß es je nach der Zahl der Wegimpulse pro Zeiteinheit unterschiedliche Verfahren zur Ermittlung der Geschwindigkeit ausführt.

Auf der Basis der Verarbeitung der Wegimpulse im Mikroprozessor 24 können beispielsweise die folgenden Werte zur Darstellung auf der Anzeige 25 aufbereitet werden: momentane Geschwindigkeit, Durchschnittsgeschwindigkeit, Maximalgeschwindigkeit, Fahrzeit seit einem frei wählbaren Zeitpunkt, zurückgelegter Weg seit dem frei wählbaren Zeitpunkt, totale Fahrzeit und/oder Gesamtsumme des zurückgelegten Weges. Es kann auch vorgesehen sein, die Weg- und Geschwindigkeitsangaben in verschiedenen Maßsystemen, beispielsweise Kilometer oder Meilen, Stundenkilometer oder Meilen pro Stunde, darzustellen. Vorteilhaft kann es sein, wahlweise zusätzlich Datum und Uhrzeit anzuzeigen, so daß die Auswerte- und Anzeigevorrichtung 21 in der Raumform der Fig. 6 wie eine Armbanduhr auch anstelle einer Armbanduhr getragen werden kann. Mit Hilfe der durch die Tasten 63 (Fig. 6) verwirklichten Bedieneinrichtung 26 (Fig. 1) lassen sich entsprechend die Anzeigemodi wählen und ändern.

Es ist vorteilhaft, die Schaltungen nach den Fig. 1, 4 und 5 zu ergänzen durch eine Codierung bzw. Decodierung. Wenngleich die zulässige Leistung des Senders 10 und die Empfindlichkeit des Empfängers 20 begrenzt sind, so wäre es doch nicht auszuschließen, daß sich die Auswerte- und Anzeigevorrichtung 21 mehrere Benutzer gleichartiger Inline Skates gegenseitig beeinflussen, daß z. B. auch der Empfänger 20 eines zweiten Benutzers anspricht und dessen Auswerte- und Anzeigevorrichtung 21 vom Sender 10 eines anderen Benutzers gestört wird. Um dies zu vermeiden, können Sender 10 und Empfänger 10 beispielsweise mit einem z.B. 24 bit langem Schlüsselwort codiert werden. Derartige Lösungen sind an sich bekannt.

In der Fig. 7 ist eine im Hinblick auf große Ausbeute elektrischer Energie ganz besonders vorteilhafte Ausführungsform des Spannungsgenerators 7 in einer Schnittzeichnung gezeigt. Mit der Achse 2 starr verbunden sind zwei Polsterne 70, wobei der zweite Polstern 70 gegenüber dem ersten Polstern 70 um 180° gewendet ist. Beide Polsterne 70 bilden zusammen eine Art Käfig. Zwischen den beiden Polsternen 70, also innerhalb dieses Käfigs, ist um die Achse 2 die Spule 6 gewickelt, an deren nicht dargestellten beiden Drahtenden die vom Spannungsgenerator 7 erzeugte elektrische Energie abgreifbar ist. Um den zylindrischen Mantel dieses Käfigs herum liegt ein Ring 71, der mit dem Rad 1 fest verbunden ist, sich also dem Rad 1 um die feststehende Achse 2 dreht. Auf der Innenseite dieses Rings 71 sind die Magnete 5 angeordnet. Auf die Innenseite des Rings 71 sind beispielsweise 12 oder 16 Magnete 5 gleichmäßig verteilt, wobei wie beim zuvor beschriebenen Ausführungsbeispiel die Magnetisierungsrichtung der Magnete 5 wechselt. Die Hälfte aller Magnete 5 ist so magnetisiert, daß der magnetische Nordpol der Achse 2 zugewandt ist, während bei der anderen Hälfte der Magnete 5 der magnetische Südpol der Achse 2 zugewandt ist. Jeweils benachbarte Magnete 5 haben entgegengesetzte Magnetisierungsrichtung.

Jeder Polstern 70 besitzt, wie in der Fig. 8 dargestellt, eine Grundfläche 72 und eine Anzahl von rechtwinklig dazu angeordneten Polen 73. Die Zahl der Pole 73 eines Polsterns 70 kann beispielsweise 16, 12, 8 oder 6 betragen. Die Pole 73 haben beispielsweise trapezförmige Gestalt, so daß der Polstern 70 insgesamt eine Gestalt wie ein Kronenrad aufweist, was aus der Fig. 7 deutlich hervorgeht. Zwischen benachbarten Polen 73 besteht jeweils eine Lücke 74.

Es wurde schon erwähnt, daß der eine Polstern 70 gegenüber dem anderen Polstern 70 um 180° gewendet ist, so daß sich die beiden Polsterne 70 so gegenüberliegen, daß ihre Pole 73 einander zugewandt sind. Vorteilhaft sind die Polsterne 70 dabei so gegeneinander verdreht, daß jeder Pol 73 in eine Lücke 74 des gegenüberliegenden Polsterns 70 eingreift. Dies ist aus der Fig. 9 leicht erkennbar, in der eine Abwicklung der Mantelfläche des durch die beiden Polsterne 70 gebildeten Käfigs dargestellt ist. Zwischen den Polen 73 der beiden Polsterne 70 entsteht durch diese Anordnung der beiden Polsterne 70 ein Luftspalt 75, der eine Mäanderform aufweist. Der nach dieser vorteilhaften Ausführungsform aufgebaute Spannungsgenerator 7 zeichnet sich dadurch aus, daß er schon bei kleiner Drehzahl eine relativ große elektrische Leistung abgibt, so daß immer genügend elektrische Energie zum Betrieb der erfindungsgemäßen Vorrichtung zur Verfügung steht.

Eine solche Ausführungsform des Spannungsgenerators 7 kann so viel elektrische Energie erzeuge, daß damit zusätzlich zur zuvor beschriebenen Einrichtung zur Generierung von Wegimpulsen und deren drahtloser Übertragung mittels des Senders 10 auch noch eine optische und/oder akustische Warneinrichtung betrieben werden kann.

## Patentansprüche

1. Sportgerät mit einer Datenanzeige für den Benutzer, wobei das Sportgerät ein Laufwerk aufweist, in dem um je eine nicht drehbare Achse drehbare Räder angeordnet sind, enthaltend
a. einen in einem Rad (1) integrierten Spannungsgenerator (7), der aus der Bewegungsenergie beim bestimmungsgemäßen Gebrauch des Sportgeräts eine elektrische Wechselspannung zu erzeugen in der Lage ist,
b. eine in dem Rad (1) angeordnete Steuerschaltung (9), die Wegimpulse generiert und die die Wechselspannung zu Gleichspannung umformt,
c. einen im Rad (1) angeordneten Sender (10), der mit einem Empfänger (22) einer Auswerte- und Anzeigevorrichtung (21) zusammenwirkt,
d. wobei der Sender (10) die Wegimpulse drahtlos zum Empfänger (22) transportiert,
e. der drahtlosen Übertragung dienende Antennen (12, 20), von denen die eine Antenne (12) im Rad (1) und die andere Antenne (20) am Empfänger (22) angeordnet ist, und
f. eine Auswerte- und Anzeigevorrichtung (21), die die Wegimpulse verarbeitet und die verarbeiteten Daten anzeigt.

2. Sportgerät nach Anspruch 1, **dadurch gekennzeichnet, daß** die Wegimpulse aus der vom Spannungsgenerator (7) erzeugten Wechselspannung generiert werden.

3. Sportgerät nach Anspruch 2, **dadurch gekennzeichnet, daß** die vom Spannungsgenerator (7) erzeugte Wechselspannung mittels einer Diode (45) und eines Schmitt-Triggers (46) in Wegimpulse wandelbar ist.

4. Sportgerät nach einem der Ansprüche 1 bis 3, **dadurch gekennzeichnet, daß** die Auswerte- und Anzeigevorrichtung (21) eine Bedieneinrichtung (26) aufweist, mit deren Hilfe Daten wie Durchmesser des Rades (1) eingebbar sind und bestimmbar ist, welche der von einem in der Auswerte- und Anzeigevorrichtung (21) enthaltenen Mikroprozessor (24) berechneten Daten wie Geschwindigkeit und Weg in einer in der Auswerte- und Anzeigevorrichtung (21) enthaltenen Anzeige (25) darstellbar sind.

5. Sportgerät nach Anspruch 4, **dadurch gekennzeichnet, daß** der Mikroprozessor (24) bei zwischenzeitlichem Fehlen von Wegimpulsen eine lineare Interpolation ausführt.

6. Sportgerät nach einem der Ansprüche 1 bis 5, **dadurch gekennzeichnet, daß** die Auswerte- und Anzeigevorrichtung (21) das Erscheinungsbild einer Armbanduhr aufweist und eine Anzeige (25) und eine aus Tasten (63) gebildete Bedieneinrichtung (26) besitzt.

7. Sportgerät nach Anspruch 6, **dadurch gekennzeichnet, daß** die der Auswerte- und Anzeigevorrichtung (21) zugeordnete Antenne (20) im Armband (61) angeordnet ist.

## Claims

1. Sport device with data display for the user, which sport device comprises a running gear wherein wheels are arranged for rotation about a respective non-rotatable axis, comprising
(a) a voltage generator (7) integrated into one wheel (1) and adapted to generate an electric AC voltage from kinetic energy when the sport device is used in the intended manner,
(b) a control circuit (9) disposed in said wheel (1) and generating distance pulses and transforming said AC voltage into DC voltage,
(c) an emitter (10) disposed in said wheel (1) for cooperation with a receiver (22) of an evaluation and display means (21),
(d) with said emitter (10) transmitting said distance pulses to said receiver (22) by radio,
(3) and comprising antennae (12, 20) provided for radio transmission, whereof the first one (12) is disposed in said wheel (1) while the other antenna (20) is arranged on said receiver (22), and
(f) an evaluation and display means (21) processing said distance pulses and displaying the processed data.

2. Sport device according to Claim 1, **characterised in that** said distance pulses are generated from the AC voltage generated by said voltage generator (7).

3. Sport device according to Claim 2, **characterised in that** the AC voltage generated by said voltage generator (7) can be converted into distance pulses by means of a diode (45) and a Schmitt trigger (46).

4. Sport device according to any of the Claims 1 to 3, **characterised in that** said evaluation and display means (21) comprises an operating means (26) that may be used for entering data such as the diameter of said wheel (1) and for determining which of the data computed by a microprocessor (24) included in said evaluation and display means, such as speed and distance, may be indicated in a display (25) included in said evaluation and display means (21).

5. Sport device according to Claim 4, **characterised in that** said microprocessor (24) performs a linear interpolation when temporary distance pulses are missing.

6. Sport device according to any of the Claims 1 to 5, **characterised in that** said evaluation and display means (2) has the appearance of a wrist watch and comprises a display (25) and an operating means (26) constituted by keys (63).

7. Sport device according to Claim 6, **characterised in that** said antenna (20) associated with said evaluation and display means (21) is disposed in the watchband.

## Revendications

1. Appareil de sport à affichage des données pour un utilisateur, qui comprend un mécanisme d'entraînement dans lequel des roues sont disposées de façon à tourner autour d'un axe respectif non tournant, comprenant
(a) a générateur de tension (7) intégré dans une roue (1) et approprié à engendre une tension électrique alternative de l'énergie cinétique quand l'appareil de sport est utilisé à des fins envisagées,
(b) un circuit de commande (9) disposé dans ladite roue (1) et engendrant des impulsions de distance parcourue et transformant ladite tension alternative en une tension continue,
(c) un émetteur (10) disposé dans ladite roue (1) de façon à coopérer avec un récepteur (22) d'un moyen d'évaluation et d'affichage (21),
(d) ledit émetteur (10) transmettant lesdites impulsions de distance parcourue audit récepteur (22) par radio,
(3) et comprenant de plus des antennes (12, 20) prévues pour la transmission par radio, dont la première (12) est disposée dans ladite roue (1) pendant que l'autre antenne (20) est disposée sur ledit récepteur (22), et
(f) un moyen d'évaluation et d'affichage (21) qui traite lesdites impulsions de distance parcourue et affiche les données traitées.

2. Appareil de sport selon la revendication 1, **caractérisé en ce que** lesdites impulsions de distance parcourue sont engendrées de la tension alternative qui est produite par ledit générateur de tension (7).

3. Appareil de sport selon la revendication 2, **caractérisé en ce que** la tension alternative engendrée par ledit générateur de tension (7) peut être convertie dans des impulsions de distance parcourue moyennant une diode (45) et une bascule de Schmitt (46).

4. Appareil de sport selon une quelconque des revendications 1 à 3, **caractérisé en ce que** ledit moyen d'évaluation et d'affichage (21) comprend un moyen d'actionnement (26) utilisable pour l'entrée de données comme le diamètre de ladite roue (1) et pour la détermination quelles parmi les données calculées par un microprocesseur (24), qui est incorporé dans ledit moyen d'évaluation et d'affichage, par exemple la vélocité et la distance, peuvent être indiquées dans un moyen de visualisation (25) incorporé dans ledit moyen d'évaluation et d'affichage (21).

5. Appareil de sport selon la revendication 4, **caractérisé en ce que** ledit microprocesseur (24) réalise une interpolation linéaire à l'absence temporaire des impulsions de distance parcourue.

6. Appareil de sport selon une quelconque des revendications 1 à 5, **caractérisé en ce que** ledit moyen d'évaluation et d'affichage (2) a l'aspect d'une montre-bracelet et comprend un écran d'affichage (25) et des moyens d'actionnement (26) constitués par des touches (63).

7. Appareil de sport selon la revendication 6, **caractérisé en ce que** ladite antenne (20) affectée audit moyen d'évaluation et d'affichage (21) est disposée dans le bracelet (61).
